# FASCICULE DE BREVET EUROPEEN

(11) **EP 4 016 381 B1**
(45) Date de publication et mention de la délivrance du brevet: **26.08.2026**
(21) Numéro de dépôt: 21213442.3
(22) Date de dépôt: 09.12.2021
(51) Int. Cl.: G06V 40/12, G06F 18/2413

(54) **PROCÉDÉ D'EXTRACTION D'UNE SIGNATURE D'UNE EMPREINTE DIGITALE ET DISPOSITIF METTANT EN OEUVRE LEDIT PROCÉDÉ**
VERFAHREN ZUR EXTRAKTION EINER SIGNATUR AUS EINEM FINGERABDRUCK UND VORRICHTUNG ZUR DURCHFÜHRUNG DIESES VERFAHRENS
METHOD FOR EXTRACTING A SIGNATURE FROM A FINGERPRINT AND DEVICE IMPLEMENTING SAID METHOD

(30) Priorité: 21.12.2020 FR 2013844
(43) Date de publication de la demande: 22.06.2022
(73) Titulaire: IDEMIA Public Security France, 92400 Courbevoie (FR)
(72) Inventeur: NIAF, Emilie, 92400 Courbevoie (FR); KAZDAGHLI, Laurent, 92400 Courbevoie (FR); CAZASNOVES, Anthony, 92400 Courbevoie (FR)
(74) Mandataire: IPS

(56) Documents cités:
- US-A1- 2018 165 508
- US-B1- 10 198 612
- GHAFOOR MUBEEN ET AL: "Fingerprint frequency normalisation and enhancement using two-dimensional short-time Fourier transform analysis", IET COMPUTER VISION, THE INSTITUTION OF ENGINEERING AND TECHNOLOGY, MICHAEL FARADAY HOUSE, SIX HILLS WAY, STEVENAGE, HERTS. SG1 2AY, UK, vol. 10, no. 8, 1 December 2016 (2016-12-01), pages 806 - 816, XP006060804, ISSN: 1751-9632, DOI: 10.1049/IET-CVI.2016.0005
- TAKAHASHI AI ET AL: "Fingerprint Feature Extraction by Combining Texture, Minutiae, and Frequency Spectrum Using Multi-Task CNN", 2020 IEEE INTERNATIONAL JOINT CONFERENCE ON BIOMETRICS (IJCB), IEEE, 28 September 2020 (2020-09-28), pages 1 - 8, XP033871116, DOI: 10.1109/IJCB48548.2020.9304861
- MAIO D ET AL: "Neural network based minutiae filtering in fingerprints", PATTERN RECOGNITION, 1998. PROCEEDINGS. FOURTEENTH INTERNATIONAL CONFE RENCE ON BRISBANE, QLD., AUSTRALIA 16-20 AUG. 1998, LOS ALAMITOS, CA, USA,IEEE COMPUT. SOC, US, vol. 2, 16 August 1998 (1998-08-16), pages 1654 - 1658, XP010297892, ISBN: 978-0-8186-8512-5, DOI: 10.1109/ICPR.1998.712036

## Description

Au moins un mode de réalisation concerne un procédé d identification d'une signature d'une empreinte digitale latente représentée par une image source.

### ETAT DE LA TECHNIQUE ANTERIEURE

Les empreintes digitales sont utilisées depuis des siècles pour identifier des personnes. Notamment, les empreintes digitales sont couramment utilisées pour l'identification d'une personne sur les lieux d'un crime. Ces empreintes digitales latentes, ou latentes, se réfèrent à des empreintes digitales qui sont laissées involontairement. En général, les latentes sont des empreintes partielles récupérées à partir de surfaces d'objets trouvés sur les lieux du crime qui sont touchés ou saisis par les doigts d'une personne. La reconnaissance des empreintes digitales permet de relier les latentes aux suspects dont les empreintes digitales étaient auparavant inscrites dans des bases de données d'empreintes digitales ou établir un lien avec des empreintes digitales latentes provenant de différentes scènes de crime. Contrairement aux empreintes digitales capturées par des appareils électroniques dédiés comme des capteurs de contact qui garantissent une certaine qualité d'image, les latentes sont généralement obtenues à partir de diverses techniques de développement chimique et physique afin d'améliorer leur visibilité. Bien que ces techniques de développement améliorent les caractéristiques des empreintes digitales, les latentes sont généralement de très mauvaise qualité par rapport à celles obtenues grâce à ces appareils électroniques dédiés. Notamment, l'information obtenue peut être partielle. En outre, les arrière-plans d'empreintes digitales latentes peuvent présenter diverses combinaisons de couleur et de texture qui peuvent masquer la latente.

Or, les performances d'un système de reconnaissance d'empreintes digitales dépendent fortement de la qualité des images d'empreintes digitales recueillies. Cela pose donc un problème pour les empreintes digitales latentes dont la qualité d'image est généralement faible. En effet, la structure de telles empreintes digitales latentes, comme les minuties et les crêtes (« ridge » en anglais), sont difficilement détectée par des algorithmes dans des systèmes d'appariement automatique.

Il est souhaitable de pallier ces différents inconvénients de l'état de la technique. Il est notamment souhaitable de proposer un procédé d'extraction d'une signature d'une empreinte digitale qui soit performant dans le cas où ces images d'empreintes digitales sont des latentes.

Exemples de l'état de la technique:
GHAFOOR MUBEEN ET AL: "Fingerprint frequency normalisation and enhancement using two-dimensional short-time Fourier transform analysis",IET COMPUTER VISION, THE INSTITUTION OF ENGINEERING AND TECHNOLOGY, MICHAEL FARADAY HOUSE, SIX HILLS WAY, STEVENAGE, HERTS. SG1 2AY, UK, vol. 10, no. 8, 1 décembre 2016 (2016-12-01), pages 806-816,ISSN: 1751-9632, DOI: 10.1049/IET-CVI.2016.0005;
US 10 198 612 B1;
TAKAHASHI AI ET AL: "Fingerprint Feature Extraction by Combining Texture, Minutiae, and Frequency Spectrum Using Multi-Task CNN",2020 IEEE INTERNATIONAL JOINT CONFERENCE ON BIOMETRICS (IJCB), IEEE, 28 septembre 2020 (2020-09-28), pages 1-8, DOI: 10.1109/IJCB48548.2020.9304861.

### EXPOSE DE L'INVENTION

L'invention est définie par les revendications indépendantes.

Selon un mode de réalisation, un procédé d'extraction d'une signature d'une empreinte digitale représentée sur une image source est décrit. Le procédé d'extraction d'une signature comprend :
- transformer ladite image source dans le domaine fréquentiel ;
- déterminer n fréquences inter-crête de ladite image source au moyen d'un réseau de neurones convolutionnel appliqué sur ladite image transformée, n étant un entier supérieur ou égal à 1 ;
- normaliser ladite image source en réponse à chacune desdites n fréquences inter-crête déterminées ;
- extraire n signatures de ladite empreinte digitale à partir desdites n images normalisées. Le procédé décrit permet avantageusement d'extraire une signature d'une empreinte digitale même dans le cas où l'image source est de moindre qualité. En effet, l'utilisation d'un réseau de neurones convolutionnel permet le cas échéant de déterminer une pluralité de fréquences inter-crête ce qui augmente la probabilité de déterminer la fréquence inter-crête correcte. L'application du réseau de neurones à l'image transformée permet d'augmenter la performance du procédé.

Dans un mode de réalisation particulier, transformer ladite image source dans le domaine fréquentiel comprend appliquer une transformée de Fourier.

Dans un mode de réalisation particulier, déterminer n fréquences inter-crête de ladite image source au moyen d'un réseau de neurones convolutionnel appliqué sur ladite image transformée comprend :
- déterminer pour chaque fréquence inter-crête d'un ensemble de N fréquences inter-crête une probabilité que ladite image source ait pour fréquence inter-crête ladite fréquence inter-crête, N étant un entier supérieur ou égal à n ;
- sélectionner les n fréquences inter-crête associées aux n probabilités les plus élevées. Dans un mode de réalisation particulier, le réseau de neurones convolutionnel est de type U-Net.

Dans un mode de réalisation particulier, n signatures de ladite empreinte digitale à partir desdites n images normalisées comprend extraire des caractéristiques de minuties appartenant à ladite empreinte digitale.

Dans un mode de réalisation particulier, lesdites caractéristiques de minuties comprennent la position et/ou l'orientation desdites minuties.

Dans un mode de réalisation particulier, le procédé comprend en outre comparer lesdites n signatures extraites avec au moins une signature extraite d'une empreinte digitale de référence associée à un individu et identifier que ladite empreinte digitale représentée sur l'image source appartient audit individu dans le cas où au moins une desdites n signatures extraites est similaire à ladite au moins une signature extraite de ladite empreinte digitale de référence.

Dans un mode de réalisation particulier, des paramètres dudit réseau de neurones convolutionnel ont été appris à partir d'une base de données d'empreintes digitales de référence pour lesquelles la fréquence inter-crête est connue.

Un dispositif d'extraction d'une signature d'une empreinte digitale représentée sur une image source comprenant :
- des moyens pour transformer ladite image source dans le domaine fréquentiel ;
- des moyens pour déterminer n fréquences inter-crête de ladite image source au moyen d'un réseau de neurones convolutionnel appliqué sur ladite image transformée, n étant un entier supérieur ou égal à 1 ;
- des moyens pour normaliser ladite image source en réponse à chacune desdites n fréquences inter-crête déterminées ;
- des moyens pour extraire n signatures de ladite empreinte digitale à partir desdites n images normalisées.

Un produit programme d'ordinateur est décrit. Le produit programme d'ordinateur comprend des instructions pour mettre en œuvre, par un processeur, le procédé d'extraction d'une signature selon l'un des modes de réalisation précédents, lorsque ledit programme est exécuté par ledit processeur.

Un support de stockage est décrit. Le support de stockage stocke des instructions pour mettre en œuvre, par un processeur, le procédé d'extraction d'une signature selon l'un des modes de réalisation précédents, lorsque lesdites instructions sont exécutées par ledit processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre l'architecture d'un système dans lequel un procédé d'extraction d'une signature d'une empreinte digitale selon un mode particulier de réalisation peut être mis en œuvre ;
[Fig. 2] illustre schématiquement un procédé d'extraction d'une signature d'une empreinte digitale, e.g. une latente, selon un mode de réalisation particulier ;
[Fig. 3] illustre une architecture de réseau de neurones convolutifs selon un mode particulier de réalisation ;
[Fig. 4] illustre divers types de minuties d'une empreinte digitale ; et,
[Fig. 5] illustre schématiquement un exemple d'architecture matérielle d'un dispositif d'extraction de signature 100 selon un mode particulier de réalisation.

### EXPOSE DETAILLE DE MODES DE REALISATION

Afin d'identifier une personne sur les lieux d'un crime, il peut être nécessaire de comparer une image d'une latente avec des images d'empreintes digitales de référence stockées dans une base de données. A cet effet, des caractéristiques sont extraites de chaque image d'empreintes digitales pour générer une signature pour ladite empreinte digitale. Une signature est également appelée « template » dans la littérature. On procède ensuite à la comparaison, deux à deux, d'une signature associée à la latente à identifier avec toutes celles des empreintes digitales de référence. Pour chaque empreinte digitale de référence, un score est obtenu qui est comparé à un seuil. Si le score est supérieur à un seuil prédéfini, alors la latente est identifiée comme appartenant à l'individu associé dans la base de données à l'empreinte digitale de référence. Sinon la latente et l'empreinte digitale de référence ne correspondent pas et donc la latente n'est pas reconnue. Il peut, par exemple, s'agir d'une trace déposée par un des occupants habituels du lieu considéré.

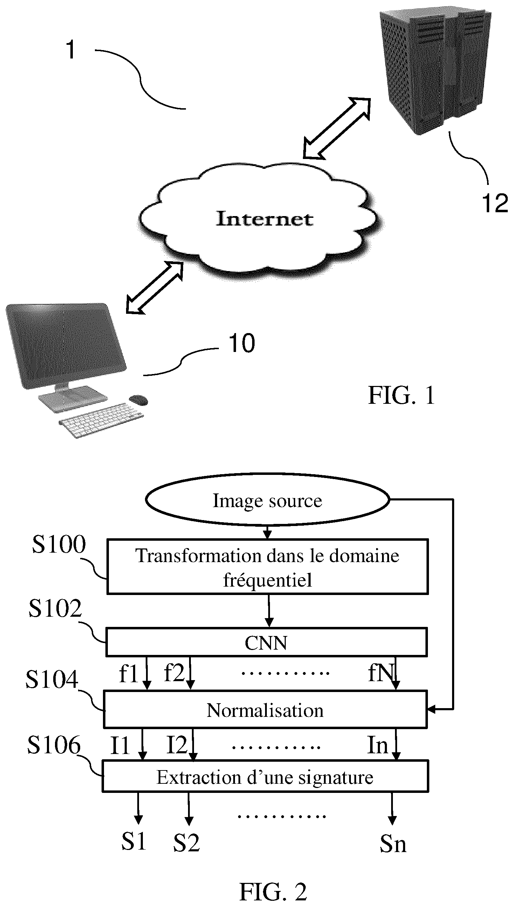

Les images de latentes étant de qualité médiocre, il est connu de pré-traiter ces images pour augmenter leur qualité avant toute extraction de signature. Certaines des transformations courantes utilisées comprennent : une gestion des couleurs, un ajustement des contrastes, une amélioration des bords, une suppression des arrière-plans et une filtration du bruit et une normalisation des images. La normalisation des images de latentes consiste en une remise à l'échelle desdites latentes afin de pouvoir ensuite les comparer à n'importe quelle autre empreinte digitale de référence stockée dans la base de données. La normalisation est effectuée à partir d'une fréquence inter-crête (« ridge frequency » en anglais). Si l'estimation de cette fréquence inter-crête est aisée sur des images d'empreintes digitales de bonne qualité capturées par des appareils électroniques dédiés, elle l'est beaucoup moins sur des images de latentes. A cet effet, un procédé d'extraction de signature mettant en œuvre une estimation particulière de la fréquence inter-crête est décrit en référence à la Fig. 2. Les modes de réalisation décrits ci-dessous s'appliquent tout aussi bien à des images de latentes qu'à des images d'empreintes digitales capturées au moyen d'appareils électroniques dédiés.

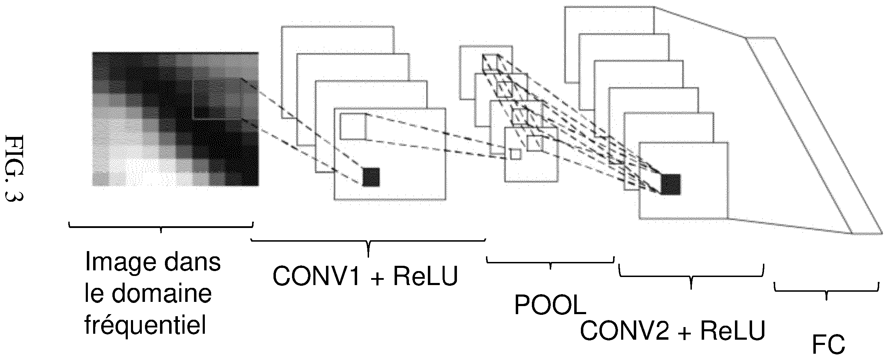

La Fig. 1 illustre l'architecture d'un système dans lequel un procédé d'extraction d'une signature d'une empreinte digitale, décrit ci-dessous en référence à la Fig. 2, peut être mis en œuvre. Le système 1 comprend un client 10 connecté à un serveur 12 au travers de l'Internet. Le serveur 12 comprend par exemple une base de données stockant des signatures d'empreintes digitales de référence. Dans une variante, la base de données est extérieure au serveur 12. Par exemple, la base de données associe à chaque signature d'empreinte digitale de référence, au moins une image de l'empreinte digitale proprement dite, ainsi qu'une identification de l'individu à qui elle appartient. Chaque signature renvoie à une ou plusieurs empreintes qui elles-mêmes renvoient à un individu. Le serveur 12 stocke en mémoire un réseau de neurones entraîné comme décrit en référence à la Fig. 3. L'entraînement du réseau de neurones est par exemple effectué par le serveur 12. Dans une variante de réalisation, le réseau de neurones entraîné est transmis au dispositif client 10 et stocké dans une mémoire du dispositif client 10. Le dispositif client 10 met en œuvre un procédé d'extraction d'une signature d'une empreinte digitale comme décrit en référence à la Fig. 2.

Dans une variante de réalisation, les dispositifs 10 et 12 sont confondus au sein d'un unique équipement.

La Fig. 2 illustre schématiquement le procédé d'extraction d'une signature d'une empreinte digitale, e.g. une latente, selon un mode de réalisation particulier. L'extraction de signature d'une empreinte digitale est également connue sous la terminologie de « codage ».

Lors d'une étape S100, l'image source de l'empreinte digitale est transformée dans le domaine fréquentiel, par exemple par une transformée de Fourier. La transformée de Fourier est par exemple une transformée de Fourier rapide FFT (acronyme anglais de « Fast Fourier Transform »). D'autres transformées peuvent être utilisées dès lors qu'elles transforment une image du domaine spatial au domaine fréquentiel. Ainsi, dans une variante de réalisation, une transformée en ondelettes est utilisée.

Lors d'une étape S102, l'image transformée est introduite dans un réseau de neurones de type CNN (acronyme anglais de « Convolutional Neural Network ») entraîné, i.e. dont les poids sont connus, tel que le réseau de neurones décrit en référence à la Fig. 3. Les paramètres du réseau de neurones ont, par exemple, été appris sur une base de données d'empreintes digitales pour lesquelles les données de sortie du réseau de neurones, en l'occurrence les fréquences inter-crêtes, sont connues. Le réseau de neurones aura été entraîné à partir d'images d'empreintes digitales transformées en utilisant la même transformée que celle utilisée à l'étape S100.

L'application sur l'image transformée du réseau de neurones CNN entraîné permet d'obtenir pour un ensemble de N fréquences inter-crête fi, où N est un entier strictement positif et i est un indice identifiant ladite fréquence inter-crête, une probabilité pi que l'image d'empreinte digitale ait une fréquence inter-crête égale à la fréquence fi, e.g. la probabilité que la fréquence corresponde à 5 pixels de période, 6 pixels, ..., 21 pixels, ..., 40 pixels. Par exemple, N=36.

Dans un mode particulier de réalisation, un réseau de type U-Net appelé « réseau entièrement convolutionnel » est appliqué. Le réseau U-Net se compose d'une partie contractante et d'une voie expansive, ce qui lui confère une architecture en forme de « U ». La partie contractante est un réseau de convolution typique qui consiste en une application répétée de convolutions, chacune suivie d'une unité linéaire rectifiée (ReLU) et d'une opération de pooling maximum. Pendant la contraction, les informations spatiales sont réduites tandis que les informations sur les caractéristiques sont augmentées. La voie expansive combine les informations de caractéristiques géographiques et spatiales à travers une séquence de convolutions et concaténations ascendantes avec des fonctionnalités haute résolution issues de la voie contractante.

Lors d'une étape S104, l'image d'empreinte digitale est normalisée en utilisant chacune des n fréquences inter-crête associées aux n probabilités les plus élevées avec n un entier strictement positif inférieur ou égal à N. Ainsi, n images normalisées Ii, avec i∈[1 ;n] sont obtenues, i.e. une image normalisée par fréquence inter-crête.

A chacune des n fréquences inter-crête associées aux n probabilités les plus élevées correspond une période Pi égale à l'inverse de ladite fréquence inter-crête. Cette étape S104 permet ainsi de normaliser toutes les images de telle sorte à avoir une même période entre les crêtes, dite période de référence Pref. Par exemple, Pref=10 pixels.

Ainsi, l'image source est normalisée de telle sorte que sa période inter-crête après modification soit égale à la période de référence Pref. Si W et H sont respectivement la largeur et la hauteur de l'image source en nombre de pixels, alors l'image source est normalisée, pour chacune des n périodes Pi, par rééchantillonnage de telle sorte que les dimensions de l'image normalisée Ii soient égales à W*Pref/Pi et H*Pref/Pi. Par exemple, si 3 fréquences inter-crêtes et donc 3 périodes différentes sont obtenues par le réseau de neurones qui sont égales à P1=5, P2=10 et P3=15 pixels, alors 3 images normalisées sont obtenues à partir de l'image source. Une première image normalisée I1 est obtenue en tenant compte de la période P1 par rééchantillonnage de l'image source de telle sorte que les dimensions de l'image normalisée soient égales à 2*W et 2*H. Une seconde image normalisée I2 est obtenue qui est l'image source elle-même puisque la période P2 est égale à Pref. Une troisième image normalisée I3 est obtenue en tenant compte de la période P3 par rééchantillonnage l'image source de telle sorte que les dimensions de l'image normalisée soient égales à 10/15*W et 10/15*H. Le rééchantillonnage d'une image est un procédé bien connu dans le domaine du traitement d'images. Un rééchantillonnage d'une image comprend généralement l'interpolation de pixels en utilisant des filtres d'interpolation, e.g. interpolation cubique, interpolation quadratique, interpolation au plus proche, interpolation bilinéaire, etc. Les modes de réalisation décrits ne se limitent pas à ces seules méthodes de rééchantillonnage. Toute méthode de rééchantillonnage permettant l'augmentation ou la diminution des dimensions de l'image peut être utilisée.

Dans un mode de réalisation particulier, n=1, i.e. seule la fréquence associée à la probabilité la plus élevée est prise en compte. Dans ce cas, une unique image normalisée I1 est obtenue. Toutefois, la prédiction par le réseau de neurones de la fréquence inter-crête étant imparfaite, lorsque le vecteur de probabilités sortant du réseau ne présente pas de pic fortement marqué, les n principaux pics, n≥2 correspondant aux n fréquences associées aux n probabilités les plus élevées, e.g. les trois fréquences associées aux probabilités les plus élevées (i.e. n=3), sont considérés afin de s'assurer que la bonne fréquence est bien extraite.

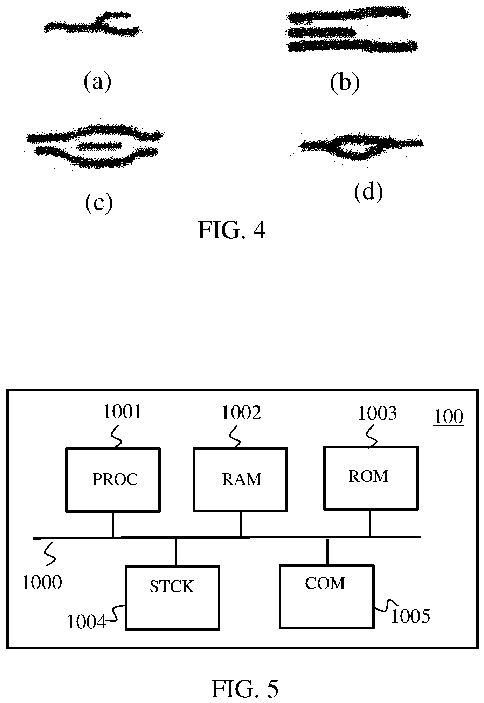

Lors d'une étape S106, à partir de chacune des n images normalisées, une signature est extraite de l'empreinte digitale. Plus précisément, des caractéristiques sont extraites de ladite empreinte afin de générer une signature. Cette signature code l'information utile de l'empreinte digitale pour une identification ultérieure. Ainsi, n signatures Si, avec i∈[1 ;n], sont obtenues, en l'occurrence une par image normalisée Ii. Dans un mode de réalisation particulier, les caractéristiques extraites sont des localisations de points particuliers illustrés **Fig. 4****,** appelés minuties, correspondant à des bifurcations (a), des terminaisons de lignes (b), des îles (c) ou lacs (d). Plus généralement, une minutie est un point qui se situe sur le changement de continuité des lignes papillaires. Il existe d'autres types de minuties non représentés sur la Fig. 4. Ainsi, la signature de l'empreinte est composée d'un certain nombre de minuties, chaque minutie étant représentée par un ensemble de paramètres (e.g. cordonnées, orientation, etc). Par exemple, avec 15 à 20 minuties correctement localisées, il est possible d'identifier une empreinte digitale parmi plusieurs millions d'exemplaires. Dans une variante de réalisation, d'autres informations sont utilisées en plus des minuties pour obtenir une signature de l'empreinte digitale comme par exemple un motif général de l'empreinte ou des informations plus complexes telles que la forme des crêtes.

L'extraction d'une signature comprend généralement le filtrage de l'image (e.g. rehaussement de contraste, réduction de bruit) pour faire ressortir la plus grande partie d'information utile, la squelettisation de l'image filtrée afin d'obtenir une image en noir et blanc de laquelle sont extraites les minuties. Parmi les minuties extraites, seules les plus fiables sont conservées, e.g. une quinzaine.

Ces n signatures peuvent avantageusement être utilisées pour déterminer si l'empreinte digitale en question appartient à une personne dont l'empreinte digitale est stockée dans une base de données. A cet effet, on procède à la comparaison, deux à deux, des n signatures Si associées à l'empreinte digitale en question avec les M signatures extraites des empreintes de la base de données, M étant un entier positif. Dans le cas où au moins une desdites n signatures Si extraites est similaire à une signature extraite d'une empreinte digitale de référence stockée dans la base de données, alors l'empreinte digitale en question est identifiée comme appartenant à l'individu associé dans la base de données à cette empreinte digitale de référence.

Une signature d'une empreinte digitale étant classiquement un nuage de points définissant les minuties, une comparaison entre deux signatures est essentiellement une comparaison entre deux nuages de points. Un score de comparaison est une note estimant à quel point ces deux nuages de points se superposent. Si les deux nuages de points se superposent alors le score est élevé, sinon le score est faible. Si le score est élevé, alors les signatures sont similaires et on peut en conclure que les empreintes digitales appartiennent au même individu. A cet effet, toute méthode de comparaison de signatures d'empreintes digitales peut être utilisée.

Dans un mode particulier de réalisation, n x M comparaisons deux à deux sont donc effectuées. Pour chaque comparaison un score est calculé. Le score maximum obtenu est conservé.

Si ce score maximum est supérieur à un seuil prédéfini, alors les signatures utilisées pour son calcul sont similaires. L'empreinte digitale en question est donc identifiée comme appartenant à l'individu associé dans la base de données à l'empreinte digitale de référence dont la signature a été utilisée pour le calcul de ce score maximum. Sinon, l'empreinte digitale en questionne correspond à aucune empreinte digitale de référence de la base de données et donc elle n'est pas reconnue.

La **Fig. 3** illustre une architecture de réseau de neurones convolutif selon un mode particulier de réalisation. Une architecture de réseau de neurones convolutif est formée par un empilement de couches de traitement parmi lesquelles :
- au moins une couche de convolution, CONV1 et CONV2, ;
- au moins une couche de correction, ReLU ;
- au moins une couche de mise en commun (« pooling » en anglais) POOL qui permet de compresser l'information en réduisant la taille de l'image intermédiaire (souvent par sous-échantillonnage) ;
- au moins une couche de combinaison linéaire FC, dite « fully connected ».

La couche de convolution comprend une convolution ou plusieurs convolutions successives par un noyau de convolution. En sortie de chaque convolution de données d'entrée par le noyau de convolution, on obtient un ensemble de caractéristiques représentatives desdites données d'entrée. Les caractéristiques obtenues ne sont pas prédéfinies mais apprises par le réseau de neurones lors d'une phase d'entraînement. Pendant la phase d'entraînement, le noyau de convolution évolue de manière à « apprendre » à extraire des caractéristiques pertinentes pour un problème donné. La couche de correction opère une fonction mathématique dite d'activation aux données obtenues en sortie de chaque convolution. La correction ReLU (acronyme anglais de « Rectified Linear Unit ») définie par f(x)=max(0,x) est par exemple utilisée. Cette fonction, appelée aussi « fonction d'activation non saturante », augmente les propriétés non linéaires de la fonction de décision et de l'ensemble du réseau sans affecter les champs récepteurs de la couche de convolution. D'autres fonctions (e.g. la fonction tangente hyperbolique) peuvent être appliquées.

La couche de mise en commun est une couche intermédiaire entre deux convolutions. Chaque phase de mise en commun a pour but de réduire la taille des données qu'elle reçoit en entrée, tout en préservant les caractéristiques importantes de ces données d'entrée. La phase de mise en commun permet de réduire le nombre de calculs dans le réseau de neurones convolutif. En particulier, les types de mise en commun les plus utilisés sont le Max et la moyenne (« average pooling » en anglais), où les valeurs maximales et moyennes d'une surface sont prises en compte, respectivement.

La couche de combinaison linéaire constitue toujours la dernière phase d'un réseau de neurones, qu'il soit convolutif ou non. Cette phase reçoit un vecteur en entrée, dit vecteur d'entrée, et produit un nouveau vecteur en sortie, dit vecteur de sortie. Pour cela, elle applique une combinaison linéaire aux composantes du vecteur d'entrée. La phase de combinaison linéaire permet de classifier les données d'entrée du réseau de neurones suivant un nombre de classes prédéfinies N. Dans le cas présent, chaque classe correspond à une valeur de fréquence inter-crête. Elle renvoie donc un vecteur de sortie de taille *N.* Chaque composante du vecteur de sortie est associée à une fréquence inter-crête et est représentative d'une probabilité que l'image d'empreinte digitale en entrée du réseau de neurones ait ladite fréquence inter-crête.

La forme la plus commune d'une architecture de réseau de neurones convolutif empile quelques couches Conv-ReLU suivies de couches Pool, et répète ce schéma jusqu'à ce que l'entrée soit réduite dans un espace d'une taille suffisamment petite.

Chaque composante du vecteur d'entrée peut contribuer différemment au vecteur de sortie. Pour ce faire, lors de l'application de la combinaison linéaire, un poids différent est appliqué à chaque composante en fonction d'une importance qu'on souhaite donner à la caractéristique que cette composante représente. La combinaison linéaire de la phase de combinaison linéaire est généralement suivie d'une couche de transformation du vecteur de sortie en distribution de probabilité. Le réseau de neurones convolutif apprend les valeurs des poids de la phase de combinaison linéaire de la même manière qu'il apprend à faire évoluer le noyau de convolution. On dit que les poids de la phase de combinaison linéaire et les caractéristiques du noyau de convolution constituent les paramètres du réseau de neurones convolutif.

Les paramètres du réseau de neurones utilisé à l'étape S102 ont été obtenus par un apprentissage à partir d'images d'empreintes digitales transformées dans le domaine fréquentiel par une transformée identique à celle utilisée à l'étape S100 et dont la fréquence inter-crêtes est connue. Ainsi, connaissant les images d'entrées du réseau de neurones et les sorties attendues, il est possible de déterminer (i.e. apprendre) les paramètres du réseau de neurones. Cet apprentissage est effectué classiquement en utilisant une fonction de coût. Il s'agit de déterminer les paramètres du réseau de neurones qui permettent d'obtenir les sorties désirées, i.e. les fréquences inter-crête connues, en minimisant la fonction de coût. Durant l'apprentissage, le réseau de neurones reçoit donc en entrée des images d'empreintes digitales transformées dans le domaine fréquentiel, et obtient en sortie un vecteur de probabilité de fréquence inter-crête dont la composante correspondant à la fréquence inter-crête de l'empreinte est à 1 et dont toutes les autres composantes sont à 0. L'apprentissage consistera donc à lui donner autant d'images d'empreintes digitales que possible, de toutes les fréquences inter-crête possibles, afin que le réseau puisse être le plus robuste possible.

Il est classique de vérifier qu'un réseau de neurones a été correctement entraîné. Pour ce faire, des images d'empreinte digitales, dites images de validation, sont utilisées qui n'ont pas servi à l'entraînement du réseau de neurones mais dont la fréquence inter-crête est également connue. Ainsi, on vérifie que le réseau de neurones fournit des fréquences inter-crête correctes pour ces images de validation. En général, si un taux d'erreur est trop élevé, le réseau de neurones est à nouveau entraîné.

La Fig. 5 illustre schématiquement un exemple d'architecture matérielle d'un dispositif d'extraction de signature 100 selon un mode particulier de réalisation. Dans un mode de réalisation, le dispositif d'extraction de signature est inclus dans le dispositif client 10.

Selon l'exemple d'architecture matérielle représenté à la Fig. 5, le dispositif d'extraction de signature 100 comprend alors, reliés par un bus de communication 1000 : un processeur ou CPU (« Central Processing Unit » en anglais) 1001; une mémoire vive RAM (« Random Access Memory » en anglais) 1002 ; une mémoire morte ROM (« Read Only Memory » en anglais) 1003; une unité de stockage 1004 telle qu'un disque dur ou telle qu'un lecteur de support de stockage, e.g. un lecteur de cartes SD (« Secure Digital » en anglais) ; au moins une interface de communication 1005 permettant au dispositif d'extraction de signature 100 d'envoyer ou de recevoir des informations.

Le processeur 1001 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque le dispositif d'extraction de signature 100 est mis sous tension, le processeur 1001 est capable de lire de la RAM 1002 des instructions et de les exécuter. Ces instructions forment un programme d'ordinateur causant la mise en œuvre, par le processeur 1001, de tout ou partie du procédé décrit en relation avec la Fig. 2. En général, le dispositif d'extraction de signature 100 comprend de la circuiterie électronique configurée pour mettre en œuvre tout ou partie du procédé décrit en relation avec la Fig. 2.

Les procédés décrits en relation avec les Figs 2 et 3 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

## Revendications

1. Procédé d'identification d'une signature d'une empreinte digitale latente représentée sur une image source comprenant :
- transformer ladite image source dans le domaine fréquentiel ;
- appliquer un réseau entrainé de neurones convolutionnel sur ladite image transformée, ledit réseau de neurones déterminant en sortie, pour chaque fréquence inter-crête d'un ensemble de N fréquences inter-crête, une probabilité que ladite image source ait pour fréquence inter-crête ladite fréquence inter-crête, N étant un entier positif ;
- sélectionner les n fréquences inter-crête associées aux n probabilités les plus élevées, n≥2 et inférieur ou égal à N ;
- normaliser ladite image source en réponse à chacune desdites n fréquences inter-crête déterminées de telle sorte à obtenir n images normalisées avec une même période entre les crêtes ;
- extraire , à partir des n images normalisées, n signatures de ladite empreinte digitale latente, les n signatures étant des caractéristiques de minutie ;
- calculer n scores de correspondance entre chacune des n signatures et une signature d'une empreinte digitale de référence ;
- identifier l'empreinte digitale latente comme appartenant à l'individu associée à l'empreinte digitale de référence dès lors que le score maximum parmi les n scores de correspondances est supérieure à une valeur seuil prédéfinie.

2. Procédé selon la revendication 1, dans lequel transformer (S100) ladite image source dans le domaine fréquentiel comprend appliquer une transformée de Fourier.

3. Procédé selon l'une des revendications 1 à 2, dans lequel le réseau de neurones convolutionnel est de type U-Net.

4. Procédé selon l'une des revendications 1 à 3, dans lequel lesdites caractéristiques de minuties comprennent la position et/ou l'orientation desdites minuties.

5. Procédé selon l'une des revendications 1 à 4, dans lequel des paramètres dudit réseau de neurones convolutionnel ont été appris à partir d'une base de données d'empreintes digitales de référence pour lesquelles la fréquence inter-crête est connue.

6. Un dispositif d'identification d'une signature d'une empreinte digitale latente représentée sur une image source comprenant :
- des moyens pour transformer ladite image source dans le domaine fréquentiel ;
- des moyens pour appliquer un réseau entrainé de neurones convolutionnel sur ladite image transformée, ledit réseau de neurones déterminant en sortie pour chaque fréquence inter-crête d'un ensemble de N fréquences inter-crête une probabilité que ladite image source ait pour fréquence inter-crête ladite fréquence inter-crête, N étant un entier positif ;
- des moyens pour sélectionner les n fréquences inter-crête associées aux n probabilités les plus élevées, n≥2 et inférieur ou égal à N ;
- des moyens pour normaliser ladite image source en réponse à chacune desdites n fréquences inter-crête déterminées de telle sorte à obtenir n images normalisées avec une même période entre les crêtes ;
- des moyens pour extraire, à partir des n images normalisées, n signatures de ladite empreinte digitale, les n signatures étant des caractéristiques de minuties ;
- des moyen pour calculer n scores de correspondance entre chacune des n signatures et une signature d'une empreinte digitale de référence ;
- des moyens pour identifier l'empreinte digitale latente comme appartenant à l'individu associée à l'empreinte digitale de référence dès lors que le score maximum parmi les n scores de correspondances est supérieure à une valeur seuil prédéfinie.

7. Un produit programme d'ordinateur **caractérisé en ce qu'**il comprend des instructions pour mettre en œuvre, par un processeur, le procédé selon l'une quelconque des revendications 1 à 5, lorsque ledit programme est exécuté par ledit processeur.

8. Un support de stockage **caractérisé en ce qu'**il stocke des instructions pour mettre en œuvre, par un processeur, le procédé selon l'une quelconque des revendications 1 à 5, lorsque lesdites instructions sont exécutées par ledit processeur.

## Patentansprüche

1. Verfahren zur Identifizierung einer Signatur eines latenten Fingerabdrucks, der auf einem Quellbild dargestellt ist, mit den folgenden Schritten:
- die Umwandlung des Quellbildes in den Frequenzbereich;
- Anwenden eines trainierten konvolutionellen neuronalen Netzes auf das transformierte Bild, wobei das neuronale Netz als Ausgabe für jede Zwischenfrequenz aus einer Menge von N Zwischenfrequenzen eine Wahrscheinlichkeit ermittelt, dass das Quellbild diese Zwischenfrequenz als Zwischenfrequenz aufweist, wobei N eine positive ganze Zahl ist;
- die n Zwischenfrequenzen auswählen, die den n höchsten Wahrscheinlichkeiten zugeordnet sind, wobei n ≥ 2 und kleiner oder gleich N ist;
- Normalisieren des Quellbildes in Abhängigkeit von jeder der n ermittelten Zwischenfrequenzen, sodass n normalisierte Bilder mit derselben Periode zwischen den Spitzen erhalten werden;
- aus den n normalisierten Bildern n Signaturen des latenten Fingerabdrucks extrahieren, wobei die n Signaturen Minutienmerkmale sind;
- Berechnung von n Übereinstimmungswerten zwischen jeder der n Signaturen und einer Signatur eines Referenzfingerabdrucks;
- den latenten Fingerabdruck als zu der Person gehörig identifizieren, die dem Referenzfingerabdruck zugeordnet ist, sobald der höchste der n Übereinstimmungswerte einen vordefinierten Schwellenwert überschreitet.

2. Verfahren nach Anspruch 1, wobei das Transformieren (S100) des Quellbildes in den Frequenzbereich das Anwenden einer Fourier-Transformation umfasst.

3. Verfahren nach einem der Ansprüche 1 bis 2, wobei das konvolutionelle neuronale Netzwerk vom Typ U-Net ist.

4. Verfahren nach einem der Ansprüche 1 bis 3, wobei die Merkmale der Minutien die Position und entweder die Ausrichtung der Minutien umfassen.

5. Verfahren nach einem der Ansprüche 1 bis 4, wobei Parameter des konvolutionellen neuronalen Netzes anhand einer Datenbank mit Referenzfingerabdrücken trainiert wurden, für die die Inter-Peak-Frequenz bekannt ist.

6. Vorrichtung zur Identifizierung einer Signatur eines auf einem Quellbild dargestellten latenten Fingerabdrucks, umfassend:
- Mittel zur Transformation des Quellbildes in den Frequenzbereich;
- Mittel zum Anwenden eines trainierten konvolutionellen neuronalen Netzes auf das transformierte Bild, wobei das neuronale Netz als Ausgangsgröße für jede Inter-Peak-Frequenz aus einer Menge von N Inter-Peak-Frequenzen eine Wahrscheinlichkeit bestimmt, dass das Quellbild diese Inter-Peak-Frequenz aufweist, wobei N eine positive ganze Zahl ist;
- Mittel zum Auswählen der Zwischenfrequenzen, die den n höchsten Wahrscheinlichkeiten zugeordnet sind, wobei n ≥ 2 und kleiner oder gleich N ist;
- Mittel zum Normalisieren des Quellbildes als Reaktion auf jede der n ermittelten Zwischenfrequenzen, um n normalisierte Bilder mit derselben Periode zwischen den Spitzen zu erhalten;
- Mittel zum Extrahieren von n Signaturen des Fingerabdrucks aus den n normalisierten Bildern, wobei die n Signaturen Minutienmerkmale sind;
- Mittel zur Berechnung von n Übereinstimmungswerten zwischen jeder der n Signaturen und einer Signatur eines Referenzfingerabdrucks;
- Mittel zum Identifizieren des latenten Fingerabdrucks als zu einer Person gehörend, die mit dem Referenzfingerabdruck in Verbindung steht, sobald der höchste der n Übereinstimmungswerte einen vordefinierten Schwellenwert überschreitet.

7. Computerprogrammprodukt, **dadurch gekennzeichnet, dass** es Befehle umfasst, um durch einen Prozessor das Verfahren gemäß einem der Ansprüche 1 bis 5 auszuführen, wenn das Programm von dem Prozessor ausgeführt wird.

8. Speichermedium, **dadurch gekennzeichnet, dass** es Befehle speichert, um das Verfahren gemäß einem der Ansprüche 1 bis 5 durch einen Prozessor auszuführen, wenn die genannten Befehle von dem genannten Prozessor ausgeführt werden.

## Claims

1. A method for identifying a signature of a latent fingerprint represented on a source image, comprising:
- transforming said source image into the frequency domain;
- applying a convolutional neural network to said transformed image, said neural network determining as an output, for each inter-peak frequency of a set of N inter-peak frequencies, a probability that said source image has said inter-peak frequency as its inter-peak frequency, where N is a positive integer;
- selecting the n inter-peak frequencies associated with the n highest probabilities, where n ≥ 2 and is less than or equal to N;
- normalising said source image in response to each of said n determined inter-peak frequencies so as to obtain n normalised images with the same period between peaks;
- extracting, from the n normalised images, n signatures of said latent fingerprint, the n signatures being minutiae;
- calculating n match scores between each of the n signatures and a signature from a reference fingerprint;
- identifying the latent fingerprint as belonging to the individual associated with the reference fingerprint whenever the highest score amongst the n match scores exceeds a predefined threshold value.

2. A method according to claim 1, wherein transforming (S100) said source image into the frequency domain comprises applying a Fourier transform.

3. A method according to one of claims 1 to 2, wherein the convolutional neural network is of the U-Net type.

4. A method according to one of claims 1 to 3, wherein said minutiae characteristics comprise the position and: or the orientation of said minutiae.

5. A method according to any one of claims 1 to 4, wherein parameters of said convolutional neural network have been learnt from a database of reference fingerprints for which the inter-peak frequency is known.

6. A device for identifying a latent fingerprint pattern represented in a source image, comprising:
- means for transforming said source image into the frequency domain;
- means for applying a trained convolutional neural network to said transformed image, said neural network outputting, for each inter-peak frequency from a set of N inter-peak frequencies, a probability that said source image has said inter-peak frequency as its inter-peak frequency, where N is a positive integer;
- means for selecting the inter-peak frequencies associated with the n highest probabilities, where n ≥ 2 and is less than or equal to N;
- means for normalising said source image in response to each of said n determined inter-peak frequencies so as to obtain n normalised images with the same period between peaks;
- means for extracting, from the n normalised images, n signatures of said fingerprint, the n signatures being minutiae characteristics;
- means for calculating n match scores between each of the n signatures and a signature of a reference fingerprint;
- means for identifying the latent fingerprint as belonging to an individual associated with the reference fingerprint whenever the highest score amongst the n match scores exceeds a predefined threshold value.

7. A computer program product **characterised in that** it comprises instructions for causing a processor to carry out the method according to any one of claims 1 to 5, when said program is executed by said processor.

8. A storage medium **characterised in that** it stores instructions for causing a processor to carry out the method according to any one of claims 1 to 5, when said instructions are executed by said processor.
